# EUROPÄISCHE PATENTANMELDUNG

(11) **EP 2 629 054 A2**
(43) Veröffentlichungstag der Anmeldung: **21.08.2013**
(21) Anmeldenummer: 13154368.8
(22) Anmeldetag: 07.02.2013
(51) Int. Cl.: G01C 21/26, G01C 21/36, G08G 1/0967

(54) **Verfahren zur Bereitstellung von Umgebungsinformationen**

(30) Priorität: 14.02.2012 DE 102012202186
(71) Anmelder: ROBERT BOSCH GMBH, 70442 Stuttgart (DE)
(72) Erfinder: Lehner, Philipp, 74372 Sersheim (DE); Schumann, Michael, 70597 Stuttgart (DE); Kanter, Pascal, 71272 Renningen (DE); Niemz, Volker, 71277 Rutesheim (DE)

(57) **Zusammenfassung**

Die Erfindung bezieht sich auf ein Verfahren zur Bereitstellung von Umgebungsinformationen, insbesondere zur Ergänzung einer Umgebungskarte (12) um Detailinformationen (14). Zunächst erfolgt eine drahtlose Übertragung (16) von Detailinformationen (14) oder von Sensordaten (43) mindestens einer Sensorik (34, 36, 38, 40, 42) an eine Mensch-Maschine-Schnittstelle (30) oder an ein bekanntes System (10). Das bekannte System (10) oder die Mensch-Maschine-Schnittstelle (30) wird um die Detailinformation (14) und/oder die Sensordaten (43) aktualisiert. Schließlich erfolgt die Bereitstellung des aktualisierten bekannten Systems (10) oder ein Zugriff auf die aktualisierte Mensch-Maschine-Schnittstelle (30) für/durch weitere Anwender (18, 20, 22).

## Beschreibung

### Stand der Technik

Die Erfindung bezieht sich auf ein Verfahren zur Bereitstellung von Umgebungsinformationen, insbesondere mittels W-LAN, UMTS, Cloud und weiterer externer Geräte zur Verbesserung der Navigation in bekannter Umgebung, auf ein dementsprechendes Computerprogramm sowie eine Vorrichtung, auf der das erfindungsgemäß vorgeschlagene Verfahren implementierbar ist.

JP 2009 069 059 A bezieht sich auf eine Parksucheinrichtung in einem Fahrzeug mit einer Komponente zum Erstellen einer Umgebungskarte auf Basis eines durch ein Parkhaus gefahrenen Weges, eine Komponente zum drahtlosen Übertragen der Kartendaten an andere Fahrzeuge sowie eine Empfangskomponente zum Empfangen entsprechender Informationen von anderen Fahrzeugen. Kartendaten werden anhand der jeweils empfangenen Informationen aktualisiert.

EP 0 921 509 A2 bezieht sich auf ein System zum Aktualisieren einer geographischen Datenbank, bei dem Sensoren in einer Vielzahl von Fahrzeugen installiert sind. Sensordaten werden an einen zentralen Server übermittelt, beispielsweise auf drahtlosem Wege. Der Server aktualisiert entsprechend den erhaltenen Daten eine geographische Karte. Diese Karte wird Fahrzeugen, beispielsweise den sensorbestückten Fahrzeugen zur weiteren Verwendung zur Verfügung gestellt.

DE 10 2008 012 661 A1 bezieht sich auf eine Aktualisierungseinheit und ein Verfahren zur Aktualisierung einer digitalen Karte. Die Fahrzeuge weisen Sensoren auf, deren Messwerte an eine Zentrale übergeben werden, welche auf Basis dieser Messwerte die Karte aktualisiert und den Fahrzeugen wieder zur Verfügung stellt. Bei der Karte kann es sich um eine Navigationskarte handeln, bei den Sensoren kommen Umfeldsensoren, GPS-Sensoren und Geschwindigkeitssensoren und dergleichen in Frage. Die Übertragungen können vorzugsweise auf drahtlosem Wege erfolgen, zum Beispiel auf Basis von UMTS oder W-LAN.

DE 10 2008 034 606 A1 offenbart ein Verfahren zur Darstellung der Umgebung eines Fahrzeugs auf einer mobilen Einheit. Diese empfängt mindestens ein Bildsignal vom Fahrzeug auf drahtlosem Wege. Die drahtlose Verbindung kann beispielsweise zu einer als Mobiltelefon ausgestalteten mobilen Einheit erfolgen, wobei das Mobiltelefon etwa mit einem Touchscreen ausgestattet sein kann.

Dieser Lösung folgend, wird durch mindestens ein Bildsignal eine Darstellung auf der mobilen Einheit generiert, welche mindestens eine perspektivisch angeordnete virtuelle Ebene enthält, auf welche mindestens ein mit einem Aufnahmemittel des Fahrzeugs aufgenommenes Bild umfassend zumindest ein Teil der Umgebung des Fahrzeugs abgebildet ist.

DE 10 2008 037 882 A1 offenbart ein Navigationssystem für ein komplexes menügesteuertes Fahrzeug-Mehrfunktionssystem. Dieses Navigationssystem umfasst eine Navigationseinheit sowie eine Mensch-Maschine-Schnittstelle (MMS). Diese sind voneinander separiert an unterschiedlichen Orten innerhalb eines Fahrzeugs verbaut. Zwischen den beiden Einheiten besteht eine drahtlose Kommunikationsverbindung, beispielsweise mittel W-LAN. Die Sensordaten können beispielsweise einen Richtungssensor, Wegstreckensensor, Lenkradwinkelsensor, Federwegsensor, ESP-Sensorik, optische Detektoren, beispielsweise in Form einer Kamera, Strahlsensorik (Radar- oder Lidarsensoren) und/oder einen Geschwindigkeitsmesser umfassen.

### Darstellung der Erfindung

Erfindungsgemäß wird ein Verfahren zur Bereitstellung von Umgebungsinformationen, insbesondere zur Ergänzung einer Umgebungskarte um Detailinformationen, vorgeschlagen, das nachfolgenden Verfahrensschritte umfasst:
a) drahtlose Übertragung von Detailinformation oder Sensordaten von mindestens einer Sensorik an eine Mensch-Maschine-Schnittstelle oder ein bekanntes System,
b) Aktualisierung des bekannten Systems um die Detailinformation oder die Sensordaten,
c) Bereitstellung des aktualisierten bekannten Systems für weitere Anwender.

Hierbei bezeichnen Detailinformationen Informationen über die Umgebung des Fahrzeuges, die beispielsweise von einem Anwender bereitgestellt werden, ohne dass es der Zwischenschaltung weiterer Elemente, etwa einer Sensorik, bedarf. So können zum Beispiel die Adressen von Hotels, die Adressen von Parkhäusern oder Restaurants oder Tankstellen und dergleichen mehr Detailinformationen darstellen, die der Anwender selbst festlegt und die im Wege der drahtlosen Übermittlung an die Mensch-Maschine-Schnittstelle (MMS) oder das bekannte System übertragen werden sollen, ohne dass es der Zwischenschaltung einer Sensorik oder dergleichen bedarf.

Bekannte Systeme können beispielsweise bereits vorhandene Umgebungskarten umfassen, die beispielsweise von einem Navigationssystem oder von Internetdiensten, wie Google Maps™, bereitgestellt werden und durch das erfindungsgemäße Verfahren aktualisiert werden. So können Umgebungskarten beispielsweise in einem Navigationssystem oder in einem Fahrassistenzsystem abgelegte Karten umfassen, die Informationen über Straßenverläufe, Abbiegemöglichkeiten, möglicherweise Points of Interest sowie Daten über weitere Verkehrsteilnehmer und dergleichen enthalten.

Erfindungsgemäß wird vorgeschlagen, Umgebungsinformationen, insbesondere Detailinformationen oder Sensordaten, an andere Verkehrsteilnehmer bzw. Anwender weiterzugeben, wobei die Weitergabe der Umgebungsinformation über eine Mensch-Maschine-Schnittstelle (MMS) beispielsweise ein Tablet-Gerät erfolgt. Durch die erfindungsgemäß vorgeschlagene Lösung kann eine unmittelbare Bereitstellung von einem Ego-Fahrzeug gewonnene Umgebungsinformationen über eine drahtlos ausgebildete Datenübertragung an Fahrzeuge in der Nähe erfolgen, und auf diesem Wege kann eine aktuelle bzw. eine ansprechend aktualisierte Umgebungskarte erhalten werden.

Erfindungsgemäß wird weiterhin ein Computerprogramm vorgeschlagen, gemäß dem eines der vorstehenden Verfahren durchgeführt wird, sobald das Computerprogramm auf einer programmierbaren Computereinrichtung ausgeführt wird. Bei der Computereinrichtung kann es beispielsweise um ein Modul zur Implementierung eines Fahrassistenzsystems oder ein Subsystem hiervon in einem Fahrzeug oder um eine Applikation für Fahrerassistenzfunktionen, welche auf einem Smartphone ausführbar ist, handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom-DVD oder einem USB-Stick. Zusätzlich oder Alternativ kann das Computerprogramm auf einer Computereinrichtung, wie etwa einem Server zum Herunterladen bereitgestellt werden, zum Beispiel über ein Datennetzwerk (Cloud) oder das Internet oder eine Kommunikationsverbindung, wie etwa eine Telefonleitung oder eine drahtlose Verbindung.

Durch die erfindungsgemäß vorgeschlagene Lösung erfolgt eine Bereitstellung eigener erkannter Details aus der Umgebung und deren Übermittlung via Cloud, Smartphone und dergleichen. Diese Daten können auf Cloud-Systemen bzw. auf Smartphones, um nur einige Mensch-Maschinen-Schnittstellen zu nennen, später abgerufen werden, so dass dementsprechend eine Verringerung des ansonsten vorzuhaltenden Speicherplatzes erfolgen kann, die Aktualität der Umgebungskarten steigt und eine breite Nutzung der bereitgestellten aktualisierten Informationen durch andere Anwender möglich ist. Wird als eine Mensch-Maschinen-Schnittstelle beispielsweise ein Tablet eingesetzt, so können Sensordaten, beispielsweise drahtlos an das Tablet übermittelt werden. Auf diesem können verschiedene Funktionen beispielsweise als App's realisiert sein, eine weitere Aktualisierung um neue Sensoren ist auf sehr einfachem Wege äußerst kostengünstig möglich. Dabei übernimmt das Tablet die Funktion der Mensch-Maschine-Schnittstelle, die über App's in die unterschiedlichsten Richtungen aktualisiert werden kann.

### Vorteile der Erfindung

Durch die erfindungsgemäß vorgeschlagene Lösung lassen sich die von einem Fahrzeug bzw. von einem an diesem Umgebungserfassungssystem gewonnenen Daten derart aufbereiten, dass diese Daten bereits bekanntes Kartenmaterial aktualisiert, und auf ein derart aktualisiertes Umgebungskartenmaterial von anderen Nutzern zugegriffen werden kann. So können beispielsweise Points of Interest oder Informationen über Parkhäuser, Tankstellen, Hotels und dergleichen in bereits bekanntes Kartenmaterial übertragen werden, so dass dessen Nutzungswert erheblich ansteigt. Die erfindungsgemäß vorgeschlagene Lösung zeichnet sich zudem dadurch aus, dass eine Mensch-Maschine Schnittstelle in Gestalt eines Tablets oder eines anderen mobilen Endgerätes durch das Aufnehmen von App's hinsichtlich ihrer Funktionalität in beliebige Richtungen erweiterbar ist.

Mittels der Fahrzeugsensorik aufgenommenen Daten können diese Informationen über eine drahtlose Verbindung an das Tablet übermitteln. Das Tablet seinerseits fungiert mit seiner Recheneinheit als Steuergerät oder die Recheneinheit des Tablets dient als zusätzliche Recheneinheit zur Erweiterung der Rechenkapazität. Die Kommunikation mit anderen Teilnehmern kann über ein gemeinsames Netzwerk, so beispielsweise über eine Cloud erfolgen, was zu einer Verbesserung des vorausschauenden Fahrens und einer Verbesserung des Kartenmaterials durch ständige Aktualisierung genutzt werden kann.

### Kurze Beschreibung der Zeichnungen

Anhand der Zeichnung wird die Erfindung nachstehend eingehender beschrieben.

Es zeigt:
- Figur 1: eine erste Ausführungsvariante des erfindungsgemäß vorgeschlagenen Verfahrens ohne Sensoriken und
- Figur 2: eine zweite Ausführungsvariante des erfindungsgemäß vorgeschlagenen Verfahrens mit einer drahtlosen Übermittlung von Sensordaten zwischen Sensoriken und einer Mensch-Maschine-Schnittstelle hier in Form eines Tablets angedeutet.

### Ausführungsvarianten

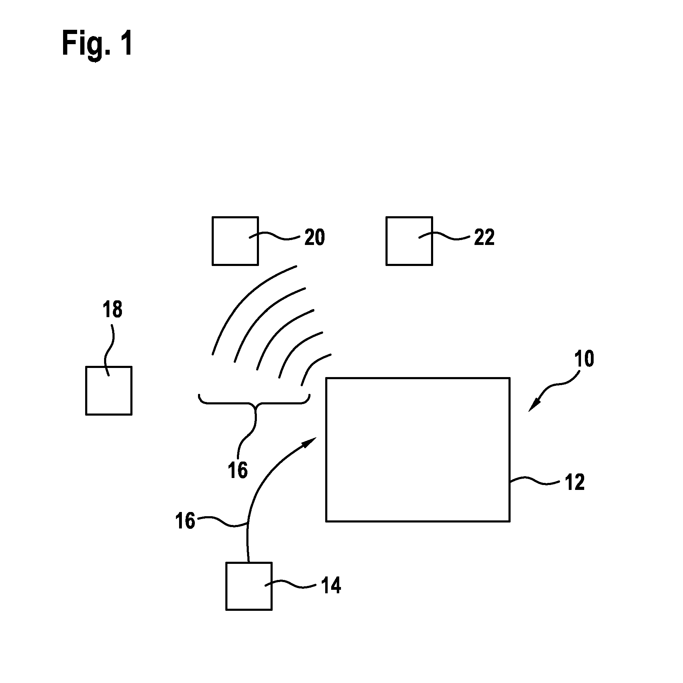

Figur 1 zeigt eine erste Ausführungsvariante des erfindungsgemäß vorgeschlagenen Verfahrens zur Bereitstellung von Umgebungsinformationen.

Wie der schematischen Darstellung gemäß Figur 1 entnommen werden kann, wird ein bekanntes System 10 in dieser Ausführungsvariante beispielsweise durch eine Umgebungskarte 12 dargestellt. Dabei handelt es sich um eine, beispielsweise in einem Navigationssystem oder in einem Fahrassistenzsystem abgelegte Karte, die Informationen über Straßenverläufe, Abbiegemöglichkeiten, möglicherweise Points of Interest sowie Daten über weitere Verkehrsteilnehmer und dergleichen enthält. Vom Fahrer eines Fahrzeugs beispielsweise für relevant erachtete Detailinformationen 14, so zum Beispiel die Adressen von Hotels, die Adressen von Parkhäusern oder Restaurants oder Tankstellen und dergleichen mehr, können dem erfindungsgemäß vorgeschlagenen Verfahren - wie in Figur 1 skizziert - über eine drahtlose Übermittlung 16 an das bekannte System 10 - hier dargestellt durch die Umgebungskarte 12 - übertragen werden. Dies bedeutet, dass das bekannte abgelegte System 10 durch Aufnahme und Berücksichtigung der neu drahtlos übermittelten Detailinformationen 14 aktualisierbar ist. Die Aktualisierung des bekannten Systems 10 kann um die Detailinformation 14 nunmehr vorgenommen werden. Ist die für relevant erachtete Detailinformation 14 bereits im bekannten System 10 vorhanden, ist eine nachträgliche Aktualisierung des bekannten Systems 10 in Gestalt einer Umweltkarte 12 nicht mehr erforderlich. Ist die auf dem Wege der drahtlosen Übermittlung 16 an das bekannte System 10 zur Aktualisierung desselben übermittelte Detailinformation 14 hingegen nicht bekannt, erfährt das bekannte System 10 die oben stehend bereits erwähnte Aktualisierung.

Ist das bekannte System 10 um ein oder mehrere Detailinformationen 14 aktualisiert, kann im Wege einer weiteren drahtlosen Übermittlung 16 das aktualisierte bekannte System 10 weiteren Anwendern 18, 20, 22 zugänglich gemacht werden. Dazu besteht beispielsweise die Möglichkeit, die aktualisierte Information, d.h. das entsprechend aktualisierte bekannte System an öffentlichen Plätzen für Anwender (User) zugänglich zu machen. Detailinformationen 14, wie zum Beispiel Hoteladressen und Garagenplätze, stellen eine durchaus weiterverbreitete nutzbare Information dar. Durch das erfindungsgemäß vorgeschlagene Verfahren, d.h. ein Aktualisieren von bekannten Systemen 10 in Gestalt einer Umgebungskarte 12 bzw. die Übertragung des aktualisierten bekannten Systems 10 über Systeme wie Cloud und W-LAN an andere System-Anwender, ermöglicht eine breite Anwendung verschiedener Funktionalitäten auch für Fahrzeuge um ein Beispiel zu nennen, die ohne Sensoren ausgestattet sind. Bei der in Figur 1 dargestellten ersten Ausführungsvariante des erfindungsgemäß vorgeschlagenen Systems, legt der Anwender selbst fest, welche Detailinformationen 14 im Wege der drahtlosen Übermittlung 16 an das bekannte System 10 - hier repräsentiert durch eine Umgebungskarte 12 - übertragen werden soll, ohne dass es der Zwischenschaltung einer Sensorik oder dergleichen bedarf.

In vorteilhafter Weise kann mit dem in Figur 1 skizzierten Übertragungssystem die Bereitstellung eigener Karten erfolgen, deren Übertragung via Cloud und Smartphone, um einen späteren Abruf zu realisieren. Über die genannten Schnittstellen, so zum Beispiel ein Netzwerk, beispielsweise eine Cloud oder ein Smartphone können die eigenen Karten auch anderen Nutzern bzw. anderen Verkehrsteilnehmern zugänglich gemacht werden, so dass eine wesentlich breitere Nutzung möglich ist und auch andere Verkehrsteilnehmer den Zugriff auf die Karten haben, die einen sehr hohen Aktualisierungsgrad haben. Des Weiteren kann durch die erfindungsgemäß vorgeschlagene Lösung eine erhebliche Verringerung des vorzuhaltenden Speicherplatzes erreicht werden. Auch bei einem Fahrzeugwechsel können aktualisierte bereitgestellte Karten sehr einfach vom einen auf das andere Fahrzeug übertragen werden.

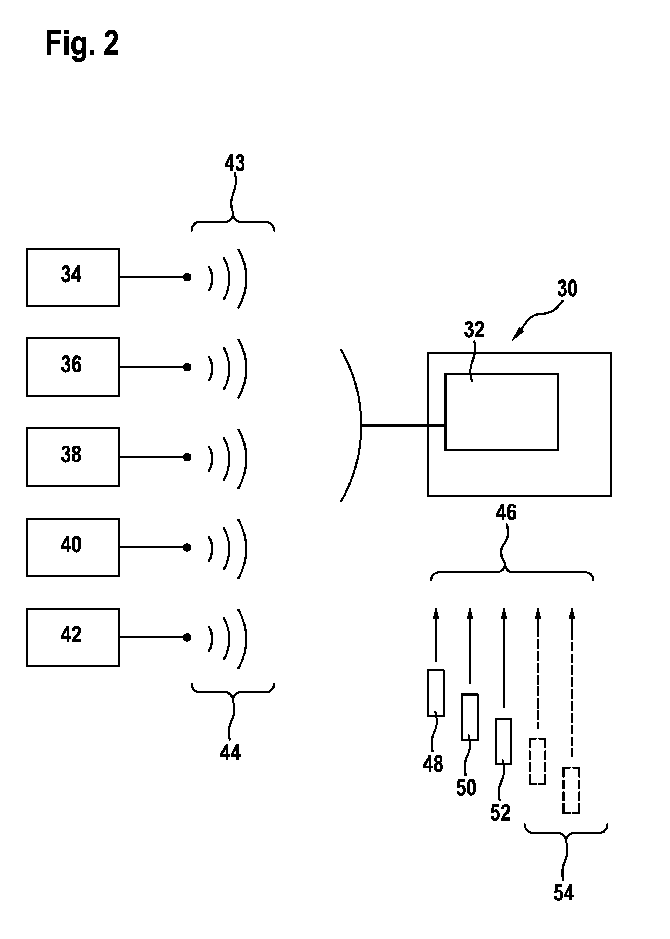

Der Darstellung gemäß Figur 2 ist eine weitere Ausführungsvariante des erfindungsgemäß vorgeschlagenen Verfahrens zur Bereitstellung von Umgebungsinformationen zu entnehmen.

Figur 2 zeigt, dass in dieser Ausführungsvariante ein Fahrzeug, beispielsweise mit Sensoriken ausgerüstet ist. Das Fahrzeug umfasst - hier nur schematisch angedeutet - zumindest eine Kamera 34. Dabei kann es sich um eine Front- und/oder eine Heck und/oder um mindestens eine Seitenkamera handeln. Des Weiteren ist in Figur 2 mit Position 36 eine Ultraschallsensorik bezeichnet, während Position 38 ein Radarsystem bzw. Lidar-System identifiziert. Eine weitere Sensorik kann durch einen Laser 40 gegeben sein, weitere Sensoriken sind durch Bezugszeichen 42 angedeutet und hier nicht im Detail aufgeführt.

Allen aufgezählten Sensoriken ist es gemeinsam, dass diese Sensordaten 43 im Wege einer drahtlosen Übermittlung 44 an ein MMS 30 übermitteln. Mit MMS 30 ist eine Mensch-Maschine-Schnittstelle bezeichnet, bei der es sich beispielsweise um ein mobiles Gerät wie ein Tablet handeln kann. Das Tablet 30 umfasst beispielsweise eine Empfangseinrichtung 32, angedeutet durch einen Parabolspiegel in Figur 2. Die von den verschiedenen Sensoriken 34, 36, 38, 40 bzw. 42 eines Fahrzeugs übermittelten Sensordaten 43 werden drahtlos übermittelt, vergleiche Position 44 und gelangen via Empfangseinrichtung 32 zur Mensch-Maschine-Schnittstelle in Gestalt eines mobilen Gerätes, wie beispielsweise eines Tablets.

Im Tablet 30 sind verschiedene Funktionalitäten realisiert. Die Funktionalitäten lassen sich auf dem Tablet 30 beispielsweise in Gestalt von Software App's realisieren. Jede einzelne auf der Mensch-Maschine-Schnittstelle 30 implementierte Funktion kann über Software-Updates - so zum Beispiel im Wege weiterer Update-App's aktualisiert werden.

In der Darstellung gemäß Figur 2 ist eine Funktionalitätserweiterung 46, die an der Mensch-Maschine-Schnittstelle 30 in Gestalt eines mobilen Gerätes wie eines Tablets vorgenommen werden kann, durch Bezugszeichen 46 angedeutet. Weitere Softwareapplikationen, d.h. eine erste Funktion 48, eine weitere zweite Funktion 40, zweite Funktion 50 bzw. eine dritte Funktion 52 können durch App's einfach auf das Tablet 30 aufgespielt werden. Nach oben ist die Anzahl der Funktionen, die zusätzlich im Rahmen einer Funktionalitätserweiterung 46 auf die MMS aufgespielt werden, keine Grenzen gesetzt. Die nach oben hinsichtlich der Anzahl offene Funktionalitätserweiterung 46 des MMS, ist in der Darstellung gemäß Figur 2 durch die gestrichelten n-te Funktionen 54 angedeutet, die auf die Mensch-Maschine-Schnittstelle aufgespielt werden können, um deren Funktionalitäten zu erweitern.

Die drahtlose Übermittlung 44 der Sensordaten 43 erlaubt eine Verarbeitung der Sensordaten 43 dahingehend, dass beispielsweise Umgebungskarten 12 -wie vorstehend bereits im Rahmen des ersten Ausführungsbeispiels beschrieben - durch entsprechende Daten beispielsweise der mindestens einen Kamera 34 aktualisiert werden können. Eine Aktualisierung bereits vorhandener bekannter Umgebungskarten 12 kann darüber hinaus durch die Sensordaten 43, die vom Radar 38 übermittelt werden, erfolgen. Die Ultraschallsensorik 46 kann beispielsweise zur Erkennung von Abständen zu Hindernissen im Rahmen einer Einparkhilfe und dergleichen genutzt werden.

Die Sensordaten 43 können in vorteilhafter Weise dazu verwendet werden, um Fahrassistenzfunktionen ohne eine autonom ablaufende Fahrzeugführung zu realisieren. So können durch die Ultraschallsensorik beispielsweise Hindernisse erkannt und eventuell mit Methainformationen als Overlay in das Kamerabild eines Fahrassistenzsystems eingeblendet werden. Es lassen sich auch Objekte klassifizieren; des Weiteren besteht die Möglichkeit zu erkennen, ob das Fahrzeug gerade eine Parklücke verlassen hat und eine Lage (GPS-Position) und Größe der Parklücke, beispielsweise durch die Ultraschallsensorik 46, Radarsenoren oder Lidar-Sensoren zu bestimmen, die ebenfalls mittels des erwähnten Smartphones, beispielsweise an ein Netzwerk wie zum Beispiel eine Cloud übertragen werden können. In Weiterentwicklung wäre auch denkbar, eine autonom erfolgende Fahrzeugführung zu realisieren. In diesem Falle sind die Anforderungen an das Tablet größer, da dieses in diesem Falle in der Lage sein müsste, mit den Fahrzeugaktoren zu kommunizieren.

Die Erfindung ist nicht auf die hier beschriebenen Ausführungsbeispiele und die darin hervorgehobenen Aspekte beschränkt. Vielmehr ist innerhalb des durch die anhängigen Ansprüche angegebenen Bereiches eine Vielzahl von Abwandlungen möglich, die im Rahmen fachmännischen Handelns liegen.

## Patentansprüche

1. Verfahren zur Bereitstellung von Umgebungsinformationen, insbesondere zur Ergänzung einer Umgebungskarte (12) um Detailinformationen (14) mit nachfolgenden Verfahrensschritten:
a) drahtlose Übertragung von Detailinformation (14) oder Sensordaten (43) von mindestens einer Sensorik (34, 36, 38, 40, 42) an eine Mensch-Maschine-Schnittstelle (30) oder ein bekanntes System (10),
b) Aktualisierung des bekannten Systems (10) um die Detailinformation (14) oder die Sensordaten (43),
c) Bereitstellung des aktualisierten bekannten Systems (10) für weitere Anwender (18, 20, 22).

2. Verfahren gemäß Anspruch 1, **dadurch gekennzeichnet, dass** eigene, erkannte Detailinformation (14) über W-LAN, ein Mobilfunknetz oder mobiles Internet direkt oder über einen Server an weitere Systeme oder andere Verkehrsteilnehmer und/oder andere Fahrzeuge übertragen werden.

3. Verfahren gemäß einem der vorhergehenden Ansprüche, **dadurch gekennzeichnet, dass** über die mindestens eine Sensorik (34, 36, 38, 40, 42) erhaltene Sensordaten (43) über eine drahtlose Übertragung (44) an die Mensch-Maschine-Schnittstelle, insbesondere ein mobiles Gerät (Tablet) (30) übertragen werden.

4. Verfahren gemäß einem der vorhergehenden Ansprüche, **dadurch gekennzeichnet, dass** die mindestens eine Sensorik Kameras, insbesondere Front- und/oder Heck- und/oder Seitenkameras (34) und/oder Ultraschallsensoren (36) umfasst.

5. Verfahren gemäß einem der vorhergehenden Ansprüche, **dadurch gekennzeichnet, dass** die mindestens eine Sensorik mindestens eine Radarkomponente (38) und/oder mindestens eine Laserkomponente (40) umfasst.

6. Verfahren gemäß einem der vorhergehenden Ansprüche, **dadurch gekennzeichnet, dass** auf der Mensch-Maschine-Schnittstelle (30), insbesondere einem Tablet (30) Funktionalitäten durch Software-App's implementiert sind.

7. Verfahren gemäß einem der vorhergehenden Ansprüche, **dadurch gekennzeichnet, dass** die Mensch-Maschine-Schnittstelle (30) durch eine Funktionalitätserweiterung (46) um weitere Funktionen (48, 50, 52, 54) erweitert werden kann.

8. Verfahren gemäß einem oder mehrerer der vorhergehenden Ansprüche, **dadurch gekennzeichnet, dass** Daten auf dem Tablet verarbeitet werden können.

9. Verfahren gemäß einem der vorhergehenden Ansprüche, **dadurch gekennzeichnet, dass** mit dem Tablet Aktuatoren des Fahrzeugs angesteuert werden, um autonome Fahrmanöver auszuführen.

10. Computerprogramm zur Durchführung eines Verfahrens gemäß einem der vorhergehenden Ansprüche, wenn das Computerprogramm auf einer programmierbaren Computereinrichtung ausgeführt wird.

11. Fahrassistenzsystem zur Bereitstellung von Umgebungsinformationen, insbesondere zur Ergänzung einer Umgebungskarte (12) um Detailinformationen (14), mit mindestens einer Komponente zur drahtlosen Übertragung von Detailinformationen (14) oder Sensordaten (43) von mindestens einer Sensorik (34, 36, 38, 40, 42) an eine Mensch-Maschine-Schnittstelle (30) oder ein bekanntes Systems (10), einer Komponente zur Aktualisierung des bekannten Systems (10) um die Detailinformationen (14) oder die Sensordaten (43) und einer Komponente zur Bereitstellung des aktualisierten bekannten Systems (10) für weitere Anwender (18, 20, 22).
